# EUROPÄISCHE PATENTSCHRIFT

(11) **EP 4 086 083 B1**
(45) Veröffentlichungstag und Bekanntmachung des Hinweises auf die Patenterteilung: **17.09.2025**
(21) Anmeldenummer: 22169438.3
(22) Anmeldetag: 22.04.2022
(51) Int. Cl.: B42D 25/305, B42D 25/355, G06K 19/077, G06K 19/18, G06K 19/02, B42B 2/00, B42D 25/24, B42D 3/12

(54) **SICHERHEITSDOKUMENT MIT FADENARTIGEM SICHERHEITSELEMENT UND VERFAHREN UND VORRICHTUNG ZU SEINER HERSTELLUNG**
SECURITY DOCUMENT WITH THREAD-LIKE SECURITY ELEMENT AND METHOD AND APPARATUS FOR ITS MANUFACTURING
DOCUMENT DE SÉCURITÉ AVEC ÉLÉMENT DE SÉCURITÉ FILIFORME ET PROCÉDÉ ET DISPOSITIF POUR SA FABRICATION

(30) Priorität: 06.05.2021 DE 102021111894
(43) Veröffentlichungstag der Anmeldung: 09.11.2022
(73) Patentinhaber: Mühlbauer ID Services GmbH, 93426 Roding (DE)
(72) Erfinder: Kusin, Dieter, 92224 Amberg (DE); Ertl, Thomas, 93444 Bad Kötzting (DE); Ederer, Martin, 93483 Pösing (DE); Brunner, Anton, 93444 Bad Kötzting (DE)
(74) Vertreter: Platzöder Patentanwaltsgesellschaft mbH

(56) Entgegenhaltungen:
- WO-A1-2004/043706
- DE-A1- 102005 021 477

## Beschreibung

Die vorliegende Erfindung betrifft ein Sicherheitsdokument mit einem fadenartigen Sicherheitselement sowie ein Verfahren zu seiner Herstellung.

Die vorliegende Erfindung liegt auf dem Gebiet der Sicherheitstechnologie für Dokumente und betrifft ein Sicherheitsdokument, insbesondere ein Ausweis- oder Wertdokument, mit einem fadenartigen Sicherheitselement sowie ein Verfahren zu seiner Herstellung.

Aus dem Stand der Technik sind insbesondere kartenförmige Sicherheitsdokumente, wie etwa Personalausweise oder Führerscheinkarten, als auch buchartige, gebundene mehrblättrige Sicherheitsdokumente, insbesondere amtliche Reisepässe oder Führerscheine, bekannt. Bei solchen Dokumenten ist oft ein aus einem mehrschichtigen Kunststofflaminat gefertigtes Datenblatt (auch als "Datenseite" oder "Holderpage" bezeichnet) als Träger für die persönlichen Informationen und meistens auch für ein Foto des Ausweisinhabers zusammen mit weiteren Dokumentenblättern (oft auch "Visaseiten" genannt), die in der Regel aus Papier oder einem papierhaltigen Gewebe bestehen, zur Ausbildung eines buchartigen Dokuments ("Buch") in einen Umschlag bzw. Einband mit Buchrücken eingebunden. Die Bindung ist dabei meist so ausgebildet, dass ein sich von einer Kante des Datenblatts aus erstreckender, meist rechteckiger Laschenbereich ("Scharnierbereich") des Datenblatts zu seiner Befestigung in dem Einband dient, während der Rest des Datenblatts wie bei einem Blatt eines Buches gegenüber dem im Einband fixierten Laschenbereich schwenkbar ist.

Der Umschlag weist in der Regel ein vorderes und einen hinteres Umschlagsubstrat auf, die jeweils als mehrschichtige Struktur mit einer robusten Außenschicht (auch als "Cover" bezeichnet) zum Schutz des Dokuments vor unerwünschten externen Einflüssen sowie einer am Cover innenseitig befestigte und im geschlossenen Zustand des Buchs der ersten bzw. letzten Buchseite zugewandten Innenschicht auf (auch als "Flyleaf"-Seite bezeichnet) aufweisen. Zwischen dem Cover und der Innenschicht können zusätzlich eine oder mehrere weitere Schichten angeordnet sein. Ein Beispiel für ein derartiges gebundenes Sicherheitsdokument ist der deutsche Reisepass, wie er gegenwärtig (2021) von den deutschen Behörden ausgegeben wird.

Zu den Sicherheitsmerkmalen, die zum Schutz von Sicherheits- und Wertdokumenten gegen Fälschung geeignet sind, gehören insbesondere mikroelektronische Sicherheitsmerkmale, bei denen bestimmte Informationen, wie etwa personenbezogene Angaben zu einem Inhaber des Dokuments, auf für das bloße menschliche Auge nicht als solche erkennbare oder jedenfalls nicht lesbare Art und Weise innerhalb eines in dem Sicherheitsdokument vorhandenen mikroelektronischen Bauelement (Mikrochip) codiert sind. Zu solchen Sicherheitsmerkmalen gehört insbesondere RFID oder NFC-Chips, die sicherheitsrelevante Informationen speichern oder generieren und über eine kontaktlose Kommunikationsschnittstelle für ein dokumentexternes geeignetes Lese- oder Funkempfangsgerät zur Verfügung stellen können.

Aus EP 2 338 175 B1 und EP 3 319 168 A1 ist jeweils eine Funkvorrichtung bekannt, die einen Funkschaltkreis mit zwei daran angeschlossenen fadenartigen und parallel zueinander verlaufenden elektrischen Leitern, die als Antenne der Funkvorrichtung dienen, aufweist. Die genannten Funkvorrichtungen weisen jeweils insgesamt eine fadenartige Struktur auf. Aus WO 2004/043706 A1 ist der Oberbegriff des Anspruchs 1 oder ein Verfahren zur Herstellung eines Sicherheitsfadens, welcher mit einem Mikrochip ausgestattet ist, bekannt. Aus DE 10 2005 021477 A1 ist ein Verfahren zum Herstellen eines Laminats für ein Pass-Inlay in einem Ausweisdokument bekannt.

Der vorliegenden Erfindung liegt die Aufgabe zugrunde, ein verbessertes, drahtlos auslesbares robustes Sicherheitsdokument bereitzustellen bzw. herzustellen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein Sicherheitsdokument, insbesondere ein Ausweisdokument oder eine Komponente (z.B. Umschlag oder Seite, z.B. Datenseite oder Visaseite) oder ein noch nicht fertig personalisierter Rohling für ein solches Sicherheitsdokument (z.B. ein erst noch zu personalisierendes, noch ganz oder teilweise unbedrucktes Ausweisbuch). Das Sicherheitsdokument weist auf: (i) eine Anzahl N blattförmiger Substrate; und (ii) ein fadenartiges Sicherheitselement, das zumindest abschnittsweise in zumindest eines der N Substrate integriert oder daran befestigt ist und das eine erste mikroelektronische Kommunikationseinrichtung, insbesondere ein aktiver oder passiver Transponder, mit einer daran elektrisch angeschlossenen Antenneneinrichtung zur drahtlosen Kommunikation von sicherheitsrelevanten ersten Informationen, insbesondere Daten oder anderen Informationen tragenden Signalen, an eine bezüglich des Sicherheitsdokuments externe Kommunikationsgegenseite aufweist; (iii) wobei das Sicherheitsdokument als ein buchartiges Dokument mit N ≥ 2 konfiguriert ist; (iv) und wobei das buchartige Dokument stattdessen oder kumulativ mit einem Buchrücken ausgebildet und das Sicherheitselement zumindest abschnittsweise in den Buchrücken integriert oder an diesem fixiert ist.

Unter einem "blattförmigen Substrat" im Sinne der Erfindung ist insbesondere eine Seite für ein ein- oder mehrblättriges Sicherheitsdokument zu verstehen, wobei das Substrat unter Verwendung eines Papier- oder Kartonwerkstoffs oder eines Kunststoffs (z.B. Polycarbonat) gefertigt sein kann. Insbesondere sind die Umschläge oder Seiten eines Ausweisdokuments, wie etwa eines karten- oder buchförmigen Personalausweises, Reisepasses, Führerscheins oder sonstigen Ausweisdokuments jeweils blattförmige Substrate im Sinne der Erfindung. Die Form der Seiten kann insbesondere wie bei Ausweisdokumenten üblich, rechteckig sein, ohne dass diese jedoch als Beschränkung zu verstehen wäre.

Unter einem "fadenartigen" Sicherheitselement ist insbesondere ein Sicherheitselement zu verstehen, das hinsichtlich seiner langestreckten, überwiegend eindimensionalen Form und vorzugsweise auch seiner ein Vernähen ermöglichenden Biegsamkeit einem Faden im Sinne der Textiltechnik gleicht oder ähnelt. Im vorliegenden Fall weist das fadenartige Sicherheitselement die erste mikroelektronische Kommunikationseinrichtung mit der daran angeschlossenen Antenneneinrichtung auf. Das bedeutet, dass die Kommunikationseinrichtung und die Antenneneinrichtung in den Faden integriert sind bzw. der Faden zumindest anteilig durch sie gebildet wird. Es ist möglich, dass die Dicke des Fadens nicht konstant ist, sondern insbesondere im Bereich der ersten mikroelektronische Kommunikationseinrichtung einen etwas höheren Durchmesser aufweist als der sonstige Faden, bevorzugt jedoch nicht mehr als das Vierfache, vorzugsweise Doppelte. Dies kann insbesondere so vorgesehen sein, dass die ersten mikroelektronische Kommunikationseinrichtung ähnlich einem Tropfen an einem Faden in das Sicherheitselement integriert ist. Dazu kann es beispielsweise vergossen sein (z.B. mittels einer Glob-Top Technik, etwa auf Harzbasis).

Unter "sicherheitsrelevanten Informationen" sind insbesondere Informationen, etwa Signale oder Daten, zu verstehen, die dazu beitragen, die Sicherheit des Sicherheitsdokuments zu erhöhen, etwa zur Ausbildung eines Sicherheitsmerkmals des Sicherheitsdokuments. Solche Informationen können insbesondere kryptographische Informationen, wie etwa kryptographische Codes oder Schlüssel, oder Personalisierungsdaten zur Personalisierung des Sicherheitsdokuments in Bezug auf ein bestimmtes damit assoziiertes Objekt, insbesondere eine Person (z.B. Ausweisinhaber), sein. Solche Personalisierungsdaten können beispielsweise den Namen, den Geburtstag bzw. das Alter, eine Staatszugehörigkeit, eine Mitgliedsnummer, oder biometrische Eigenschaften der Person betreffen.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Aktivierung einer dieser Konfigurationen bzw. Betriebsmodi erfolgen kann.

Bei dem Sicherheitsdokument gemäß dem ersten Aspekt ist ein fadenartiges mikroelektronisches Sicherheitselement vorgesehen, das sich somit bereits anhand seines Formfaktors von herkömmlichen mikroelektronischen Sicherheitselementen für Dokumente, insbesondere von RFID-Tags mit einer sich überwiegend zweidimensional in der Fläche erstreckenden Spule bzw. Antenne, unterscheidet. Damit sind bereits besonders platzsparende Lösungen ermöglicht, bei denen das Sicherheitselement nur einen sehr geringen Platzbedarf im Sicherheitsdokument beansprucht.

Zum anderen erlauben es die fadenartige Form und die damit einhergehende Biegsamkeit des Sicherheitselements, dieses auch an solchen Stellen des Sicherheitsdokuments unterzubringen, die beim Gebrauch typischerweise einer, insbesondere starken, Biegebeanspruchung unterliegen können, beispielsweise in einem Buchrückenbereich eines buchartigen Sicherheitsdokuments oder in einem flexiblen Substrat, wie etwa einer Papierseite des Sicherheitsdokuments. Die fadenartige Form erlaubt somit insbesondere auch ein Unterbringen des Sicherheitselements an "untypischen" bzw. "unerwarteten" Stellen, wodurch die Fälschungssicherheit weiter erhöht wird.

Durch die fadenartige Form des Sicherheitselements ist es sogar möglich, das Sicherheitselement als Faden in einer Naht oder als Teil eines textilen Gewebes vorzusehen, was Vorteile insbesondere im Hinblick auf die Robustheit der Verankerung bzw. Befestigung des Sicherheitselements in dem Sicherheitsdokument, das Erschweren einer Kompromittierung der Sicherheit des Sicherheitsdokuments durch Entfernen des Sicherheitselements aus dem Sicherheitsdokument, sowie ein Verstecken des Sicherheitselements im Sicherheitsdokument als verstecktes (engl. "covert") Sicherheitsmerkmal haben kann.

Zudem können sich bei der Fertigung Vorteile ergeben, da das fadenartige Sicherheitselement dabei von einer Rolle zugeführt werden kann. Bei der Rolle kann es sich insbesondere um eine sog. "Endlosrolle" handeln, auf die ein Faden aufgewickelt ist, der entlang seines Verlaufs sequenziell aufgereiht eine Mehrzahl, insbesondere eine Vielzahl, der genannten Sicherheitselemente aufweist, sodass zur Applikation eines einzelnen Sicherheitselements dieses nur noch von dem Faden auf der Rolle abgetrennt werden muss, um es für die individuelle Integration in oder Befestigung an einem oder mehreren Substraten des zu fertigenden Sicherheitsdokuments zu vereinzeln und bereitzustellen.

Das Sicherheitsdokument kann insbesondere ein Ausweisdokument sein, wie beispielsweise ein Reisepass. Es kann insbesondere einen Umschlag mit einer Mehrzahl von innenliegenden Seiten, beispielsweise Datenseite(n) und Visaseite(n), enthalten. Die Verwendung des fadenartigen Sicherheitselements ist im Zusammenhang mit einem solchen buchartigen Sicherheitsdokument besonders vorteilhaft, da hier zum einen im Hinblick auf das Verstecken des Sicherheitselements im Sinne eines "versteckten (engl. "covert") Sicherheitsmerkmals" aufgrund des komplexeren Aufbaus eines solchen buchartigen Dokuments besonders viele Variationsmöglichkeiten für die Anordnung bzw. Integration des Sicherheitselements in das Dokument bestehen, und zum anderen oftmals eine hohe Robustheit von Sicherheitselementen gegenüber Biegebeanspruchungen erforderlich ist.

Der Buchrücken kann insbesondere ein Falzbereich eines Umschlags sein (der z.B. eine Nut mit gegenüber den Umschlagseiten verminderter Dicke aufweisen kann). Des Weiteren kann das Sicherheitsdokument so gestaltet sein, dass seine durch den Falzbereich bzw. Buchrücken verbundenen vorderen und/oder hinteren Umschlagseiten jeweils dicker sind als der Falzbereich bzw. Buchrücken dazwischen.

Nachfolgend werden bevorzugte Ausführungsformen des Sicherheitsdokuments beschrieben, die jeweils, soweit dies nicht ausdrücklich ausgeschlossen wird oder technisch unmöglich ist, beliebig miteinander und den weiteren Aspekten der Erfindung kombiniert werden können.

Bei einigen dieser Ausführungsformen ist ein erstes der N Substrate als Datenseite oder als Umschlag (oder hier gleichbedeutend "Einband"), insbesondere Schutzumschlag, für das buchartige Dokument konfiguriert und das Sicherheitselement ist zumindest abschnittsweise in dieses erste Substrat integriert. Die Datenseiten und Umschläge solcher Sicherheitsdokumente sind typischerweise insbesondere im Hinblick auf den Schutz vor chemischen oder physikalischen, insbesondere mechanischen oder feuchtigkeitsbedingten, externen Einwirkungen robuster ausgeführt als andere Substrate des Dokuments, beispielsweise Papierseiten, so dass hier eine besonders robuste Integration des Sicherheitselements ermöglicht ist.

Bei einigen Ausführungsformen weist das erste Substrat einen schichtförmigen Aufbau auf, in den das Sicherheitselement zumindest abschnittsweise integriert ist. Insbesondere Datenseiten und Umschläge sind in der Regel mehrschichtig, z.B. als Laminat, ausgeführt, so dass sich hier vielfältige verschiedene Möglichkeiten zur, insbesondere versteckten, Integration des Sicherheitselements bieten. Der schichtförmige Aufbau bedingt oftmals auch eine größere Dicke solcher Substrate (Umschlagseiten), was wiederum die, insbesondere versteckte, Integration ermöglicht oder zumindest erleichtert, insbesondere dann, wenn die Fadenstärke des Sicherheitselements nicht konstant ist. Das Sicherheitselement kann etwa mittels Kleben oder Laminieren in den Schichtaufbau integriert sein, insbesondere so, dass das Sicherheitselement längs einer "langen" Seite des ersten Substrats verläuft, wie etwa dann, wenn dieses im Wesentlichen eine rechteckige Form aufweist.

Bei einigen Ausführungsformen weist das erste Substrat einen Scharnierbereich zur Verbindung des ersten Substrats mit wenigstens einem der N-1 anderen Substrate zur Ausbildung des buchartigen Dokuments auf. Das Sicherheitselement ist dabei zumindest abschnittsweise in den Scharnierbereich integriert.

Sowohl die beiden vorgenannten Bauarten einzeln als auch in Kombination, werden insbesondere durch die Fadenartigkeit des Sicherheitselements, insbesondere durch die dadurch bedingte Biegefähigkeit, erschlossen, so dass eine solche Art der Integration unter Meidung der Gefahr einer Beschädigung des Sicherheitselements beim Gebrauch des Sicherheitsdokument mit entsprechenden Biegebeanspruchungen im Scharnierbereich bzw. Buchrücken ermöglicht ist. Auch lässt sich das Sicherheitselement auf diese Weise besonders gut verstecken, da der Scharnierbereich und der Buchrücken regelmäßig von außen kaum oder nur mit erhöhtem Aufwand zerstörungsfrei einsehbar und in der Regel auch selbst intransparent sind.

Bei einigen dieser Ausführungsformen weist der Buchrücken zu seiner Verstärkung ein textiles Verstärkungsband auf, in das das Sicherheitselement zumindest abschnittsweise integriert ist. Hier kann das Sicherheitselement insbesondere als Faden selbst als Bestandteil eines textilen Gewebes des Verstärkungsbands integriert sein. Auch hier sind die vorgenannten Vorteile bezüglich Robustheit der Integration und der guten Versteckbarkeit des Sicherheitselements im Dokument anwendbar. Die Aufnahme als Faden in das textile Verstärkungsband kann sogar eine noch höhere Robustheit, insbesondere auch im Hinblick auf einen Schutz vor (unauffälliger, insbesondere zerstörungsfreier) Entfernung des Sicherheitselements bieten.

Bei einigen Ausführungsformen ist das Sicherheitselement mit einem holographischen Faden oder Streifen zu einem kombinierten faden- bzw. streifenförmigen Sicherheitselement mittels Integration in oder fester Verbindung mit dem holographischen Faden bzw. Streifen kombiniert. Somit lässt sich die Sicherheit, insbesondere Fälschungssicherheit, des Sicherheitsdokuments weiter erhöhen. Auch eine effizientere Fertigung ist denkbar, wenn die beiden Sicherheitsmerkmale (Sicherheitselement und holographischer Faden bzw. Streifen) als kombiniertes Sicherheitselement nicht getrennt, sondern in einem einzigen bzw. gemeinsamen Integrationsprozess bzw. -Schritt in das Sicherheitsdokument aufgenommen werden können, anstatt separat aufgenommen werden zu müssen.

Bei einigen dieser Ausführungsformen weist das Sicherheitsdokument eine Anzahl M, mit 2 ≤ M ≤ N, von untereinander gleichartigen, blattförmigen Substraten auf und das kombinierte Sicherheitselement in nur eines dieser M Substrate integriert oder daran befestigt. Die Gleichartigkeit der Substrate kann sich insbesondere auf ihren Aufbau und/oder ihre Funktion im Rahmen des Sicherheitsdokuments beziehen. Beispielsweise kann es sich um Substrate für den Umschlag des Dokuments, um verschiedene Laminatseiten (z.B. Datenseiten aus Kunststofflaminat), oder um Papierseiten (z.B. Visaseiten) des Dokuments handeln. Die vorgenannte selektive Anordnung des Sicherheitselements kann wiederum für ein besseres Verstecken als des Sicherheitselements als Sicherheitsmerkmal genutzt werden.

Bei einigen Ausführungsformen bildet das Sicherheitselement als Faden einen Teil einer Naht in oder an dem Sicherheitsdokument. Das Sicherheitselement kann hier somit insbesondere im Sinne von "dual-use" mehrere Aufgaben, nämlich insbesondere einerseits seine Sicherheitsfunktion und andererseits die Herstellung einer Naht, etwa zu Befestigen eines oder mehrere Substrate in dem Dokument, erfüllen. Auch kann die Integration als Bestandteil einer Naht wiederum für ein besseres Verstecken des Sicherheitselements als verstecktes Sicherheitsmerkmal genutzt werden.

Bei einigen dieser Ausführungsformen ist die Naht zumindest abschnittsweise als Doppelsteppstich-Naht ausgeführt, wobei das Sicherheitselement einen Unterfaden der Doppelstich-Naht bildet. Diese Art der Naht ist besonders gut zu bewerkstelligen, da hier geringere Anforderungen an die Verarbeitbarkeit und Vernähbarkeit, insbesondere bezüglich Biegsamkeit und Gleichförmigkeit des Fadendurchmessers, gestellt werden als bei den meisten anderen bekannte Nahttypen. Als Oberfaden kann hier insbesondere ein zweiter Faden aus Nylon oder Textilmaterial verwendet werden.

Bei einigen Ausführungsformen weist die Antenneneinrichtung zwei elektrisch voneinander isolierte drahtförmige Antennenleitungen auf, von denen jede an einer jeweiligen zwischen ihren Enden liegenden Kontaktstelle elektrisch an die erste Kommunikationseinrichtung angeschlossen ist, und wobei die Antennenleitungen insgesamt eine Dipolantenne mit elektrisch offenen Enden bilden. Insbesondere können die beiden von der jeweiligen Kontaktstelle einer Antennenleitung ausgehenden Arme der Antennenleitung unterschiedlich lang gewählt sein, was insbesondere so erfolgen kann, dass damit eine Impedanzanpassung der Dipolantenne implementiert ist.

Der Durchmesser der Antennenleitungen kann insbesondere im Bereich von 40-400µm liegen, wobei sich der Bereich von 50-200µm und darin speziell der Bereich von 60-150µm als besonders geeignet herausgestellt haben, um einen guten Kompromiss zwischen einer möglichst kleinen Bauform mit hoher Biegefähigkeit einerseits und einer guten mechanischen Robustheit und/oder elektrischer Leistungsfähigkeit (insbesondere Stromtragfähigkeit) andererseits miteinander in Einklang zu bringen.

Bei einigen Ausführungsformen weist die erste Kommunikationseinrichtung einen passiven Transponder zur drahtlosen Kommunikation der sicherheitsrelevanten Informationen auf. Zudem ist die Antenneneinrichtung als Induktionseinrichtung konfiguriert, um in Reaktion auf ein auf sie einwirkendes magnetisches oder elektromagnetisches Wechselfeld eine Induktionsspannung zu generieren und damit den Transponder mit elektrischer Energie zu versorgen. So kann auf eine Energiequelle, wie etwa ein elektrochemischer Energiespeicher, in dem Sicherheitsdokument bzw. dem Sicherheitselement selbst verzichtet werden. Die Konfiguration als Induktionseinrichtung kann insbesondere dadurch erreicht werden, dass die beiden Antenennleitungen, in Analogie zu Außen- und Innenleiter bei einem Koaxialkabel, zusammenwirken, um eine Induktivität der Antenneneinrichtung zu definieren. Es ist auch möglich, dass die beiden Antennenleitungen, insbesondere temporär (beispielsweise getaktet), durch die erste Kommunikationseinrichtung elektrisch verbunden werden, um zusammen eine Induktivität auszubilden, so dass ein variabler magnetischer Fluss (Magnetflussdichte B) durch eine zwischen den beiden Antennenleitungen liegende Fläche induktiv wirken kann, um die Induktionsspannung zu generieren. Zusätzlich oder außerdem ist es möglich, dass die Antennenleitungen in oder an dem Sicherheitselement jeweils spiralförmig, insbesondere helixartig (und zusammen insbesondere doppelhelixartig) verlaufen, so dass die Querschnittsfläche dieser Spiralanordnung als Leiterschleife(n) und somit als Induktivität wirken kann.

Bei einigen Ausführungsformen ist die erste Kommunikationseinrichtung konfiguriert, Informationen, insbesondere die sicherheitsrelevanten ersten Informationen, im UHF-Band, also im Frequenzbereich zwischen 300 MHz and 3 GHz, bevorzugt zwischen 800 MHz und 980 MHz, drahtlos zu kommunizieren. Dazu kann die erste Kommunikationseinrichtung insbesondere eingerichtet sein, gemäß der RFID-Technologie drahtlos zu kommunizieren. Damit sind insbesondere auch kurzreichweitige Drahtloskommunikation jenseits des Nahfelds (insbesondere jenseits der NFC Technologie) im Bereich von einigen Metern bis zu einigen zehn Metern gut realisierbar, was insbesondere genutzt werden kann, um das Sicherheitsdokument bereits über eine solche Entfernung hin zu detektieren und ggf. anhand der von der ersten Kommunikationseinrichtung des Sicherheitsdokuments ausgesendeten ersten Informationen zu identifizieren.

Bei einigen Ausführungsformen sind die erste Kommunikationseinrichtung und die Antenneneinrichtung mit einer sie beide zumindest abschnittsweise umgebenden Ummantelung versehen. Die Ummantelung kann insbesondere zum Schutz vor externen mechanischen oder anderen störenden Einwirkungen und/oder zur Ausbildung des fadenartigen Sicherheitselements als aus seinen Bestandteilen gebildetes Gebinde dienen. Die Ummantelung kann insbesondere schlauchförmig oder mittels einer Umwickelung der innenliegenden Bestandteile des Sicherheitselements, insbesondere der ersten Kommunikationseinrichtung und der Antenneneinrichtung, ausgebildet sein. Die Umwickelung kann dabei insbesondere Textil- oder Kunststofffasern aufweisen, insbesondere daraus bestehen, wodurch zugleich auch eine elektrische Isolation des umwickelten Inneren des Sicherheitselements erreicht werden kann. Zusätzlich oder alternativ können die Antennenleitungen auch einzeln isoliert sein, insbesondere mit einem dielektrischen Material beschichtet oder anderweitig umgeben sein.

Bei einigen Ausführungsformen kann das Sicherheitselement zusätzlich ein insbesondere im Wesentlichen faden- oder drahtförmiges Zugentlastungselement aufweisen, das sich zusammen mit den Antennen zumindest abschnittsweise entlang dem Verlauf des Sicherheitselements erstreckt und dazu konfiguriert ist, etwaige auf das Sicherheitselements einwirkende Zugkräfte, wie sie etwa beim Gebrauch des Sicherheitsdokuments oder während seiner Herstellung möglicherweise auftreten können, aufzunehmen bzw. abzufangen, um so andere Bestandteile des Sicherheitselements, insbesondere die Antenneneinrichtung und deren Anschlüsse und die erste Kommunikationseinrichtung vor Beschädigungen durch solche Zugkräfte zu schützen.

Bei einigen Ausführungsformen weist das Sicherheitsdokument des Weiteren eine zweite mikroelektronische Kommunikationseinrichtung zum kontaktlosen Übertragen von aus einem mit der zweiten mikroelektronischen Kommunikationseinrichtung assoziierten oder in ihr enthaltenen zweiten Datenspeicher gelesenen zweiten Informationen auf. Dabei weist das Sicherheitsdokument zumindest eine der folgenden Konfigurationen (a) und (b) auf:
(a) Die zweiten Informationen sind in dem zweiten Datenspeicher verschlüsselt abgelegt und/oder der Lesezugriff auf den zweiten Datenspeicher ist durch die zweite Kommunikationseinrichtung nur auf Basis einer Authentifizierung mittels eines Schlüsselcodes möglich. Die erste Kommunikationseinrichtung ist zudem konfiguriert, den Schlüsselcode zu generieren oder aus einem mit der ersten Kommunikationseinrichtung assoziierten ersten Datenspeicher auszulesen und für die Entschlüsselung der zweiten Informationen bzw. für die Authentifizierung zum autorisierten Lesezugriff auf den zweiten Datenspeicher bereitzustellen;
(b) Die ersten Informationen und die zweiten Informationen codieren zusammen eine für eine erfolgreiche Identifikation oder Authentifizierung eines mit den ersten Informationen assoziierten Objekts, insbesondere einer Person, erforderliche Sicherheitsinformation auf solche Weise, dass die Sicherheitsinformation erst durch Kombinieren der ersten Informationen mit den zweiten Informationen verfügbar wird.

In beiden Fällen kann somit die Sicherheit des Sicherheitsdokuments, insbesondere hinsichtlich seines Fälschungsschutzes, erhöht werden, da eine aufeinander abgestimmte Kombination der beiden Kommunikationseinrichtungen für eine erfolgreiche Identifikation oder Authentifizierung eines mit den ersten Informationen bzw. der Sicherheitsinformation assoziierten Objekts erforderlich ist.

Insbesondere können bei einigen dieser Ausführungsformen die zweiten Informationen und/oder die Sicherheitsinformation zumindest teilweise einer anderweitig auf dem Sicherheitsdokument verfügbaren Information entsprechen, so dass auf Basis eines Vergleichs dieser anderweitig verfügbaren Informationen einerseits mit der zweiten Informationen bzw. den Sicherheitsinformationen andererseits eine Mehrfaktoridentifikation bzw. Authentifizierung des Sicherheitsdokuments oder eines damit assoziierten Objekts ermöglicht ist.

Ein zweiter Aspekt der Erfindung betrifft ein Verfahren zur maschinellen Herstellung eines Sicherheitsdokuments nach dem ersten Aspekt, insbesondere eines Ausweisdokuments oder einer Komponente oder eines Rohlings dafür. Das Verfahren weist auf: (i) Herstellen oder Empfangen (z.B. über eine Zuführ- oder Fördereinrichtung) eines Sicherheitsdokuments, das eine Anzahl N blattförmiger Substrate, mit N ≥ 2 aufweist; und (ii) Integrieren oder Befestigen eines fadenartigen Sicherheitselements, in bzw. an zumindest einem der N Substrate, wobei das Sicherheitselement eine erste mikroelektronische Kommunikationseinrichtung mit einer daran angeschlossenen Antenneneinrichtung zur drahtlosen Kommunikation von ersten sicherheitsrelevanten Informationen an eine bezüglich des Sicherheitsdokuments externe Kommunikationsgegenseite aufweist, wobei das Sicherheitsdokument als ein buchartiges Dokument mit N ≥ 2 konfiguriert ist, wobei das buchartige Dokument mit einem Buchrücken ausgebildet ist und das Sicherheitselement zumindest abschnittsweise in den Buchrücken integriert oder an diesem fixiert wird. Der Schritt (ii) kann dabei insbesondere im Rahmen des Schrittes (i), insbesondere gleichzeitig damit, oder aber diesem nachfolgend ausgeführt werden.

Bei einigen Ausführungsformen des Verfahrens erfolgt das Integrieren oder Befestigen des Sicherheitselements zumindest teilweise auf wenigstens eine der folgenden Weisen: (i) Ausbilden einer stoffschlüssigen Verbindung des Sicherheitselements mit dem zumindest einen Substrat; (ii) maschinelles Ausbilden einer Naht in dem zumindest einen Substrat, wobei das Sicherheitselement als ein Faden der Naht, insbesondere individuell oder zusammen mit einem oder mehreren anderen Fäden, vernäht wird.

Wie bereits vorausgehend erläutert, erlaubt dies insbesondere eine sehr robuste Verankerung des Sicherheitselements in dem Sicherheitsdokument und ermöglicht die Verwendung des Sicherheitselements als verstecktes Sicherheitsmerkmal.

Die in Bezug auf den ersten Aspekt der Erfindung erläuterten Merkmale und Vorteile sind entsprechend auch für die weiteren Aspekte der Erfindung anwendbar.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch in einer kombinierten Gesamt- und Detailansicht ein buchartiges Sicherheitsdokument gemäß einer beispielhaften Ausführungsform der Erfindung, wobei zugleich verschiedene alternativ oder kumulativ anwendbare Möglichkeiten für die Platzierung des Sicherheitselements in dem Sicherheitsdokument illustriert sind;
**Fig. 2** schematisch in einer Aufsicht das buchartige Sicherheitsdokument aus Fig. 1 in der speziellen Ausführung, bei der das Sicherheitselement im oder am Buchrücken des Sicherheitsdokuments angeordnet ist;
**Fig. 3** schematisch in einer Explosionszeichnung einen beispielhaften Schichtaufbau für einen aus mehreren Substraten gebildeten Umschlag des Sicherheitsdokuments aus Fig. 1 und 2 im Querschnitt;
**Fig. 4A und 4B** schematisch zwei verschiedene beispielhafte Ausführungsformen eines fadenartigen mikroelektronischen Sicherheitselements, das in einem erfindungsgemäßen Sicherheitsdokument als dessen Sicherheitselement enthalten sein kann;
**Fig. 5** ein Flussdiagramm zur Veranschaulichung einer bevorzugten Ausführungsform eines erfindungsgemäßen Herstellungsverfahrens;
**Fig. 6** ein Diagramm zur Erläuterung einer durch das Sicherheitsdokument aus Fig. 1 ermöglichten Zwei-Faktor-Identifizierung von Personen (Ausweisinhabern); und
**Fig. 7** ein Diagramm zur Illustration verschiedener durch das Sicherheitsdokument aus Fig. 1 ermöglichten Anwendungsmöglichkeiten zur Identifizierung von Personen, insbesondere im Verkehrswesen.

In den Figuren werden durchgängig dieselben Bezugszeichen für dieselben oder einander entsprechenden Elemente der Erfindung verwendet.

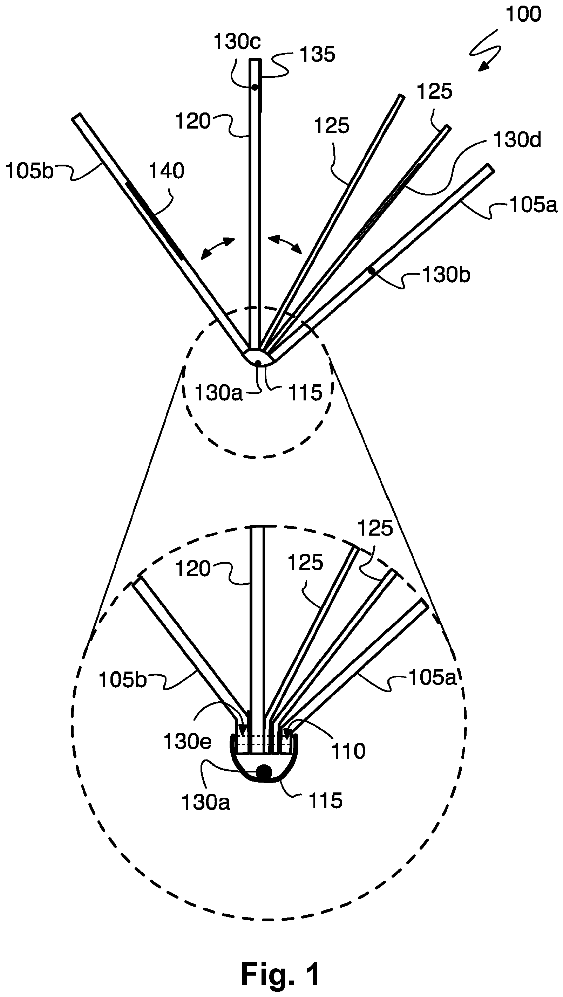

In **Fig. 1** ist eine beispielhafte Ausführungsform 100 eines buchartigen Sicherheitsdokuments in einer Aufsicht entlang einer entlang des Buchrückens verlaufenden Sichtachse illustriert. Das Sicherheitsdokument 100 kann insbesondere ein Passdokument oder sonstiges mehrseitiges Ausweisdokument sein. Es enthält einen Umschlag 105, der zwei beispielsweise aus einem mehrschichtigen Laminataufbau bestehende seitenförmige Substrate 105a und 105b aufweist, die durch einen Buchrücken 115 miteinander verbunden sind und zusammen mit diesem einen (Schutz-)Umschlag 105 des Sicherheitsdokuments 100 bilden. Innerhalb dieses Umschlags 105 sind als weitere seitenförmige Substrate eine, beispielsweise als Kunststofflaminat ausgebildete Datenseite 120 sowie mehrere Papierseiten 125 (z.B. Visaseiten) vorgesehen, sodass sich insgesamt das buchartige Sicherheitsdokument 100 ergibt, wie in Fig. 1 illustriert.

Das Sicherheitsdokument 100 kann über ein oder mehrere Sicherheitsmerkmale verfügen, die insbesondere durch ein oder mehrere an dem Sicherheitsdokument 100 befestigte oder darin integrierte Sicherheitselemente ausgebildet sein können. Ein solches Sicherheitselement ist ein mikroelektronisches Sicherheitselement 130, das an anderen Bestandteilen des Sicherheitsdokuments 100 befestigt oder darin integriert sein kann, wozu eine Reihe verschiedener Platzierungsmöglichkeiten besteht, von denen einige beispielhaft in Fig. 1 mit den Bezugszeichen 130a bis 130e gekennzeichnet sind.

Erfindungsgemäß muss die Platzierung so sein, dass das Sicherheitselement zumindest abschnittsweise in den Buchrücken integriert oder an diesem fixiert ist.

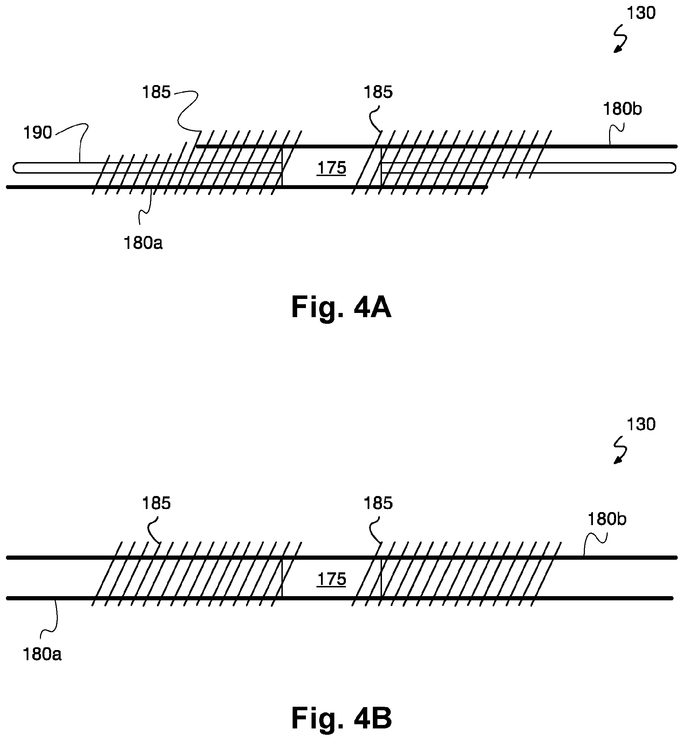

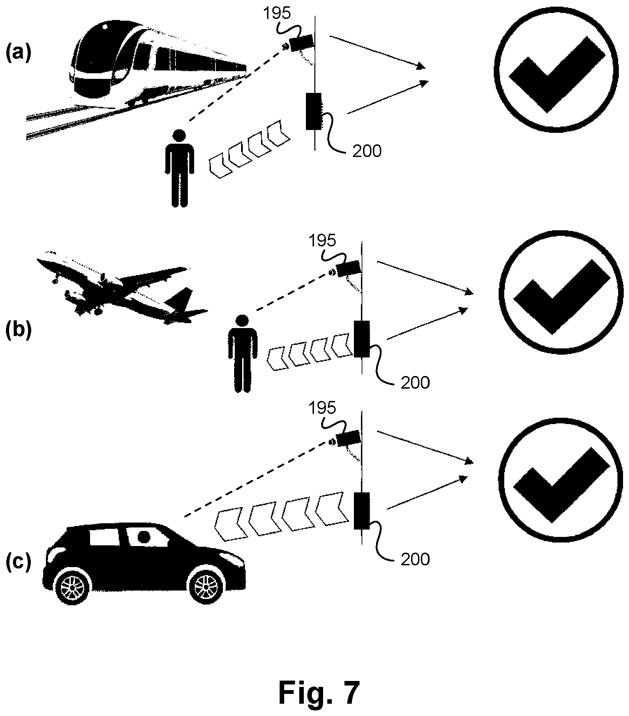

Das Sicherheitselement 130 ist fadenförmig ausgebildet und daher zum einen biegsam und zum anderen überwiegend eindimensional geformt. Es weist eine erste mikroelektronische Kommunikationseinrichtung 175 mit einer daran elektrisch angeschlossenen Antenneneinrichtung 180a, 180b zur drahtlosen Kommunikation von sicherheitsrelevanten ersten Informationen an eine bezüglich des Sicherheitsdokuments 100 externe Kommunikationsgegenseite 200 auf (vgl. Fig. 7). Eine beispielhafte Ausführungsform eines solchen fadenförmigen Sicherheitselements 130 wird im Weiteren detaillierter unter Bezugnahme auf die Figuren 4A und 4B erläutert werden.

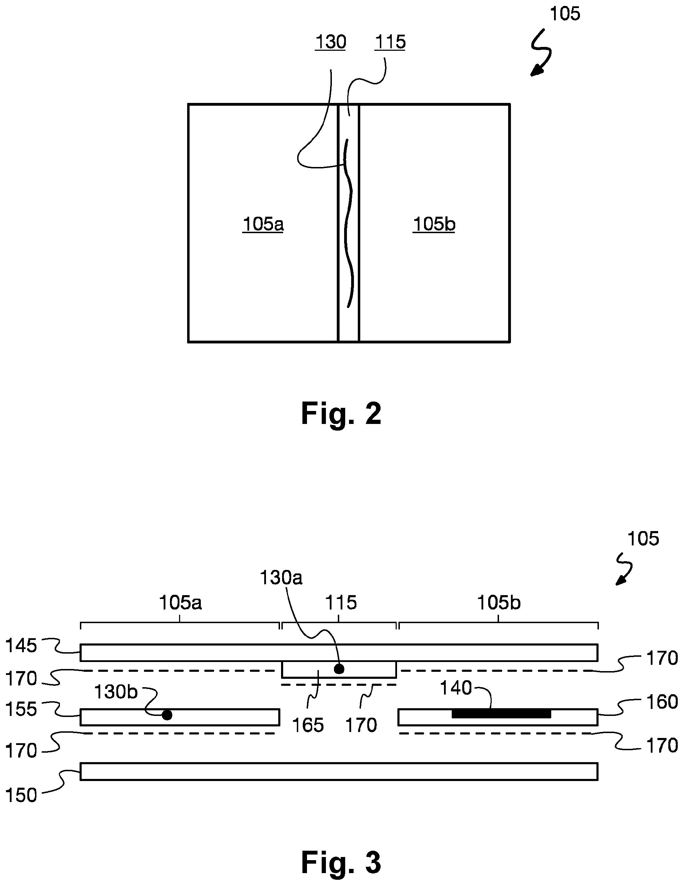

Zu den genannten Platzierungsmöglichkeiten gehört erfindungsgemäß die zusätzlich auch in **Fig. 2** illustrierte Möglichkeit, das Sicherheitselement 130, wie Fig. 1 mit dem Bezugszeichen 130a gekennzeichnet, an dem Buchrücken 115 zu befestigen oder darin zu integrieren, insbesondere so, dass das Sicherheitselement zumindest näherungsweise parallel zur Schwenkachse des Sicherheitsdokuments 100 verläuft. Dies ist insofern günstig, als der Buchrücken 115 zum einen Schutz vor äußeren Einwirkungen auf das Sicherheitselement 130 bietet und zum anderen einen Hohlraum definiert, in dem das Sicherheitselement leicht und insbesondere auch von außen unsichtbar und somit versteckt untergebracht werden kann.

Eine weitere Möglichkeit, die in sich nicht beansprucht ist, besteht darin, dass Sicherheitselement 130, wie mit dem Bezugszeichen 130b gekennzeichnet, an einer der Umschlagseiten 105a des Umschlags 105 zu befestigen oder es darin zu integrieren. Dies kann insbesondere so erfolgen, dass das Sicherheitselement 130 als Faden in ein gegebenenfalls in der Umschlagseite 105a vorhandenes textiles Gewebe eingewebt oder in einen Schichtaufbau der Umschlagseite 105a integriert wird, wie nachfolgend beispielhaft anhand von **Fig. 3** erläutert werden wird.

Eine noch weitere Möglichkeit, die in sich nicht beansprucht ist, besteht darin, wie mit dem Bezugszeichen 130c gekennzeichnet, das Sicherheitselement 130 in die Datenseite 120 zu integrieren, insbesondere in einem gegebenenfalls vorhandenen Schichtaufbau, beispielsweise Laminat, derselben. In einer Variante kann dies beispielsweise so erfolgen, dass das Sicherheitselement 130 mit einem holographischen Streifen 135 zu einem kombinierten Sicherheitselement zusammengefasst wird, das an bzw. auf der Datenseite 120 (oder wahlweise auch auf einem anderen Substrate Sicherheitsdokuments 100) aufgebracht wird.

Eine noch weitere Möglichkeit, die in sich nicht beansprucht ist, besteht darin, wie mit dem Bezugszeichen 130d gekennzeichnet, das fadenförmige Sicherheitselement 130 an oder in einer der Papierseiten 125 zu integrieren, wobei hier beispielhaft eine andere Möglichkeit zur Orientierung des Fadens illustriert ist (Quer zur Scharnierachse des Sicherheitsdokuments) als bei den vorgenannten anderen Möglichkeiten, bei denen das fadenförmige Sicherheitselement 105 jeweils im Wesentlichen parallel zu Scharnierachse des Sicherheitsdokuments 100 verlaufend dargestellt ist.

Eine wiederum noch weitere beispielhafte Möglichkeit, die in sich nicht beansprucht ist, besteht darin, wie mit dem Bezugszeichen 130e gekennzeichnet, das Sicherheitselement 130 als Faden in einer Naht zu verwenden, die hier beispielhaft eine Naht zum Verbinden der verschiedenen Substrate des Sicherheitsdokuments 100 im Bereich des Buchrückens 115 ist. Im unteren Bereich der Fig. 1 sind zwei parallele Nähte dargestellt, von denen zumindest eine das Sicherheitselement 130 als Faden enthält. Die Nähte verlaufen hier durch sogenannte Scharnierbereiche der durch die Nähte miteinander verbundenen Substrate 120 und 125. Beispielhaft ist hier der Scharnierbereich der vorderen Umschlagseite 105a mit dem Bezugszeichen "110" kennzeichnet. Die Scharnierbereiche können insbesondere eine geringere Dicke aufweisen als die klappbaren Bereiche der jeweiligen Substrate, die gegenüber dem jeweiligen Scharnierbereich beim Blättern des buchartigen Sicherheitsdokuments 100 schwenkbar sind.

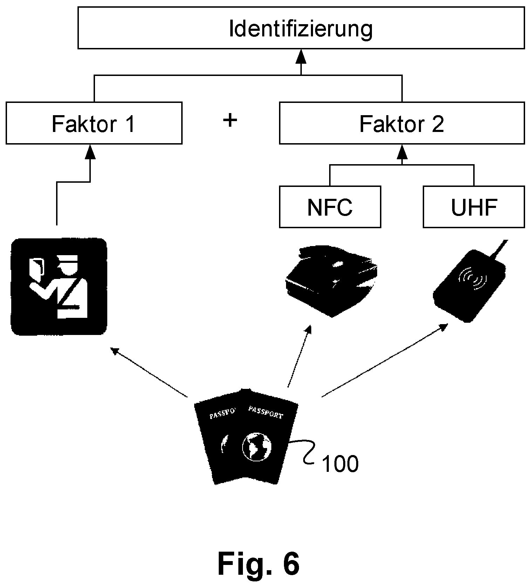

Neben dem Sicherheitselement 130 kann das Sicherheitsdokument 100 als weiteres Sicherheitsmerkmal eine zweite Kommunikationseinrichtung 140, insbesondere eine Nahfeld-Kommunikationseinrichtung (wie etwa eine NFC-Kommunikationseinrichtung mit einem entsprechenden mikroelektronischen NFC-chip und einer NFC-Antenne) aufweisen, in der selbst oder einem damit assoziierten Datenspeicher Daten, insbesondere sicherheitsrelevante Daten (wie etwa Personalisierungsdaten und/oder landesspezifische Daten), gespeichert und beim Aufbau einer entsprechenden Kommunikationsverbindung mit der Kommunikationseinrichtung 140 auslesbar sind. Auf Möglichkeiten zur Nutzung dieser zweiten Kommunikationseinrichtung 140 wird im Weiteren unter Bezugnahme auf Fig. 6 weiter eingegangen werden. In einer Ausführungsform können sich die Arbeitsfrequenzen der ersten mikroelektronischen Kommunikationseinrichtung und der zweiten mikroelektronischen Kommunikationseinrichtung (z.B. 13,56 MHz) voneinander unterscheiden.

**Fig. 3** zeigt einen beispielhaften Schichtaufbau für einen aus mehreren Substraten gebildeten Umschlag 105 des Sicherheitsdokuments aus den Figuren 1 und 2 im Querschnitt. Hierbei weist der Schichtaufbau eine Sandwich-Bauform auf, bei der zwischen einem ersten flächenförmigen Umschlagsubstrat 145, welches ein- oder mehrschichtig ausgebildet sein kann, und einem zweiten flächenförmigen Umschlagsubstrat 150, welches beispielsweise als ein- oder mehrschichtiger Karton ausgebildet sein kann, weitere Zwischensubstrate 155, 160, 165 liegen, die einen Kern des Sandwich-Schichtaufbaus bilden.

Ein erstes Zwischensubstrat 155 ist hier als mehrschichtiges Inlay ausgebildet, in das insbesondere das Sicherheitselement 130 bzw. 130b integriert sein kann. Ein zweites Zwischensubstrat 160 kann insbesondere ein- oder mehrschichtig ausgebildet sein und darin integriert die Nahfeld-Kommunikationseinrichtung 140, insbesondere einen NFC Chip mit zugehöriger Antenne, aufweisen. Im Bereich des Buchrückens 115 kann zudem ein drittes Zwischensubstrat 165 in Form eines, insbesondere textilen, Verstärkungsbandes vorgesehen sein, dass wahlweise auch das Sicherheitselement 130 bzw. 130a enthalten kann. Insbesondere kann das Sicherheitselement 130 bzw. 130a als Faden in das textile Gewebe des Verstärkungsbandes 165 eingewoben oder eingenäht sein. Die verschiedenen Substrate 145-165 des Schichtaufbaus können untereinander mittels Lamination oder mittels verschiedener Klebeschichten 170 stoffschlüssig zu dem Umschlag 105 verbunden sein.

In anderen Ausführungsformen können das Sicherheitselement 130 und die zweite Kommunikationseinrichtung 140 auch in unterschiedlichen Substraten (z.b. Datenseite einerseits und Umschlag andererseits) befinden. 140 ist häufig auch in der Datenseite einlaminiert. Insbesondere ist es möglich, dass dabei die Nahfeld-Kommunikationseinrichtung 140 in die Datenseite integriert, insbesondere einlaminiert ist.

Beispielhafte Ausführungsformen des Sicherheitselements 130 sind in den **Figuren 4A und 4B** illustriert. Bei einer ersten, in **Fig. 4A** illustrierten Ausführungsform weist das Sicherheitselement 130 eine erste mikroelektronische Kommunikationseinrichtung in Form eines UHF-Transponder-Chips 175 sowie zwei daran elektrisch angeschlossene Antennenleitungen 180a und 180b auf. Die beiden Antennenleitungen 180a und 180b sind dabei jeweils so an den Transponder-Chip 175 angeschlossen, dass die Anschlussstelle zwischen den beiden Enden der jeweiligen Antennenleitung 180a bzw. 180b liegt. Insgesamt bilden die Antennenleitungen 180a und 180b zusammen einerseits eine Antenneneinrichtung als Dipolantenne zum Senden und Empfangen von Funksignalen im UHF-Band sowie andererseits eine Induktionsvorrichtung (Selbstinduktivität) für den als passiver Transponder ausgebildeten Transponder-Chip 175, sodass von außen eingekoppelte magnetische oder elektromagnetische Wechselfelder den passiven Transponder-Chip 175 induktiv mit Energie versorgen und aktivieren können.

Die jeweils von der Anschlussstelle am Transponder-Chip 175 aus gesehen kürzeren Abschnitte der beiden Antennenleitungen 180a und 180b sind insbesondere zur Impedanzanpassung der entsprechenden Antennenleitung einsetzbar, in dem bei der Produktion des Sicherheitselements 130 die Länge dieser Abschnitte entsprechend gewählt wird, eine gewünschte Impedanz einzustellen. Zudem können sie zur Ausbildung der vorgenannten Induktivität beitragen.

Des Weiteren kann in dem Sicherheitselement 130 optional ein, insbesondere fadenförmiges, Zugentlastungselement 190 vorgesehen sein, welches in der Lage ist, extern auf das Sicherheitselement 105 einwirkende potentielle Zugkräfte zumindest weitgehend abzufangen, um die Antennenleitungen 180a und 180b vor solchen Kräften zu schützen und somit dabei vor einer Beschädigung oder Zerstörung zu bewahren.

Zudem kann das Sicherheitselement 130 eine Schutzschicht aufweisen, die im vorliegenden Beispiel durch eine Umwicklung 185 gebildet wird, die den Transponder-Chip 175, die Antennenleitungen 180a und 180b und gegebenenfalls das Zugentlastungselement 190 miteinschließt. Die Umwicklung 185 kann insbesondere durch einen Textilstreifen oder -faden gegeben sein. Das Sicherheitselement 130 als Ganzes kann somit auch äußerlich einem reinen Textilfaden ähnelnd und ähnlich wie ein solcher verarbeitet werden.

Bei einer zweiten, in **Fig. 4B** illustrierten Ausführungsform des Sicherheitselements 130 verlaufen die beiden Antennenleitungen 180b und 180b, zumindest im Wesentlichen, jeweils entlang des gesamten Verlaufs des Sicherheitselements 130 entlang seiner fadenförmigen Erstreckung. Entsprechend umgibt auch die Umwicklung 185) die beide Antennenleitungen 180a und 180b entlang ihres gesamten Verlaufs. Zusätzlich kann optional wiederum ein Zugentlastungselement 190 vorgesehen sein, wenngleich dies speziell bei der in Figur 4B gezeigten Variante nicht der Fall ist. Ansonsten entspricht die Ausführungsform aus Fig. 4B derjenigen aus Fig. 4A.

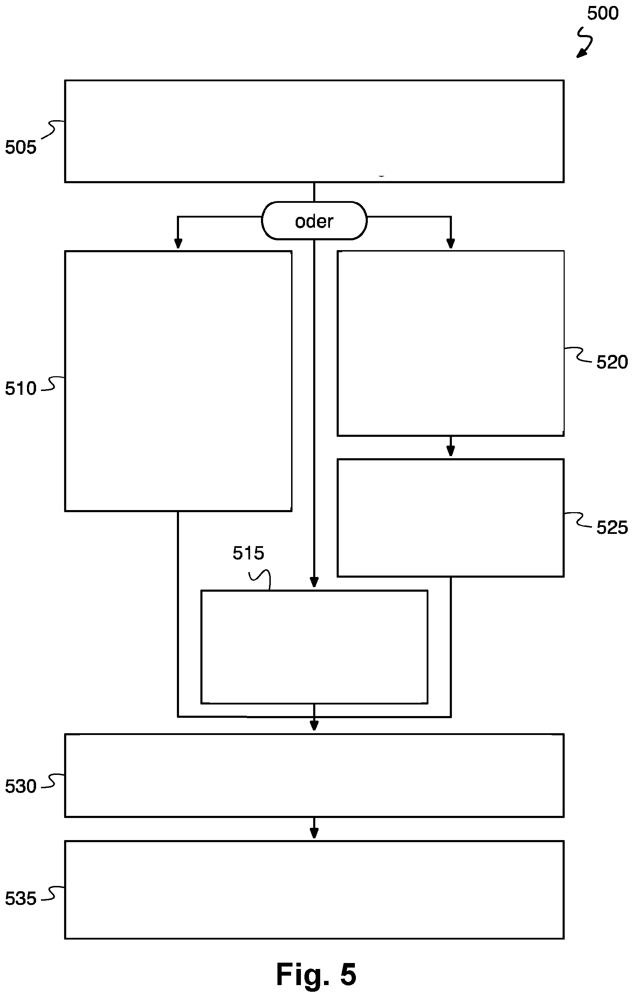

In **Fig. 5** ist in Form eines Flussdiagramms eine beispielhafte Ausführungsform 500 eines Verfahrens zum Herstellen eines Sicherheitsdokuments illustriert, wobei beispielhaft auf das Sicherheitsdokument 100 aus den vorausgehenden Figuren Bezug genommen wird. Bei dem Verfahren werden in einem Schritt 505 mehrere seitenförmige Substrate, aus denen das Sicherheitsdokument 100 gefertigt werden soll, bereitgestellt. Zu den Substraten können insbesondere ein Umschlag 105 mit Buchrücken 115 und Verstärkungsband 165, die Datenseite 120 und die Papierseiten 125 gehören, wie bereits vorausgehend im Detail erläutert wurde.

Für die weitere Verarbeitung der Substrate zur Herstellung des Sicherheitsdokuments 100 stehen nun alternativ oder (vor allem im Falle mehrerer Sicherheitselemente 130) kumulativ verschiedene Möglichkeiten zur Verfügung, die insbesondere zu den verschiedenen, in den Figuren 1 bis 3 gezeigten Möglichkeiten 130a bis 130e zur Befestigung bzw. Integration des Sicherheitselements 130 an dem bzw. in das herzustellenden Sicherheitsdokument 100 korrespondieren. In Figur 500 sind beispielhaft drei dieser Möglichkeiten illustriert.

Gemäß einer ersten Möglichkeit wird in einem Schritt 510 das Sicherheitselement 130 bzw. 130a auf den Buchrücken 115 aufgeklebt oder in diesen vernäht, insbesondere so, dass das Sicherheitselement 130/130a entlang oder parallel zur späteren Schwenkachse der Seiten des Sicherheitsdokuments 100 verläuft.

Gemäß einer zweiten Möglichkeit wird in einem Schritt 515 das Sicherheitselement 130 bzw. 130a als Faden das Verstärkungsband 165 integriert, insbesondere mittels Einweben oder Vernähen. Alternativ oder kumulativ kann es, insbesondere auch nur abschnittsweise, auf das Verstärkungsband 165 aufgeklebt werden.

Gemäß einer dritten Möglichkeit wird in einem Schritt 520 das Sicherheitselement 130 bzw. 130c mit einem holographischen Streifen zu einem kombinierten Sicherheitselement zusammengefasst, insbesondere indem das Sicherheitselement 130/130c beispielsweise auf den holographischen Streifen 135 aufgeklebt wird. Das daraus entstehende kombinierte Sicherheitselement 130c/135 wird sodann in einem weiteren Schritt 525 auf eines der Substrate, beispielsweise auf eine der Papierseiten 125 (z. B. Visaseite) aufgebracht, was wiederum insbesondere mittels einer stoffschlüssigen Verbindung erfolgen kann.

Unabhängig davon, welche dieser drei Möglichkeiten gewählt wurde, folgt ein Schritt 530, den das Verstärkungsband 165 mit den anderen Bestandteilen des Umschlags 105, insbesondere mit den Umschlagseiten 105a, b verklebt wird. Insbesondere kann diese Klebung an einer Papierauskleidung (fly leaf) einer oder beider Umschlagseiten 105a, b erfolgen, wobei die Papierauskleidung selbst wiederum geklebt sein kann.

Schließlich werden die verschiedenen seitenförmigen Substrate, im Falle des Sicherheitsdokuments 100 also die Datenseite 120 und die Papierseiten 125, mit dem Umschlag 105 einschließlich seines Verstärkungsbands 165 zu einem buchartigen Sicherheitsdokument 100 verbunden, das dementsprechend ein oder mehrere Sicherheitselemente 130 beinhaltet.

**Fig. 6** zeigt ein Diagramm zur Erläuterung einer durch das Sicherheitsdokument aus Fig. 1 ermöglichten Zwei-Faktor-Identifizierung von Personen (Ausweisinhabern). Als erster Faktor (Faktor 1) sind auf dem Sicherheitsdokument 100 erste Identifikationsinformationen vorhanden, die entweder durch einen menschlichen Kontrolleur lesbar und/oder durch eine geeignete Lesevorrichtung maschinenlesbar sind. Diese ersten Identifikationsinformationen können insbesondere auf oder in einen der Substrate 120 oder 125 aufgedruckt bzw. eingebracht sein, sei es in lesbarer Schrift, beispielsweise in Form eines biometrischen Merkmals, etwa einem Gesichtsbild, oder etwa mittels eines Barcodes oder einem anderen maschinenlesbaren Code.

Ein zweiter Faktor (Faktor 2) für die Identifikation ergibt sich erst durch das Zusammenspiel der zwei in dem Sicherheitsdokument 100 integrierten Kommunikationseinrichtungen, nämlich einerseits dem Sicherheitselement 130, welches im UHF-Band per Funk kommunizieren kann, und andererseits der Nahfeld-Kommunikationseinrichtung 140, die hier insbesondere eine gemäß der bekannten standardisierten NFC-Technologie arbeitende Kommunikationseinrichtung ist. In der Nahfeld-Kommunikationseinrichtung 140 kann ein Datenspeicher vorgesehen sein, in dem zweite Informationen, insbesondere Identifikationsinformationen, die denjenigen des Faktor 1 entsprechen, kryptografisch verschlüsselt gespeichert sind. Der zum Entschlüsseln dieser zweiten Informationen benötigte kryptografische Schlüssel kann von dem Sicherheitselement 130 zur Verfügung gestellt werden, indem er dort entweder generiert oder aus einem darin enthaltenen Datenspeicher ausgelesen wird.

Um den zweiten Faktor zu generieren, wird also durch das Sicherheitselement 130 der Schlüssel zur Verfügung gestellt und damit die Verschlüsselung der verschlüsselten zweiten Informationen vorgenommen. Die Zwei-Faktor-Identifizierung kann sodann auf Basis sowohl des Faktors 1 als auch des Faktors 2 erfolgen, indem die dazu korrespondierenden ersten Identifikationsinformationen und zweiten (Identifikations-) informationen einen Vergleich unterzogen werden. Stimmen sie im Rahmen des Vergleichs gemäß einem vorbestimmten Prüfkriterium überein, so ist die Identifikation erfolgreich, andernfalls schlägt sie fehl, was ein Hinweis auf eine Fälschung des Sicherheitsdokuments 100 sein kann.

Alternativ oder kumulativ ist es auch möglich, die zweiten (Identifikations-)informationen so in mehrere Informationsteile aufzuteilen und diese separat auf die beiden Kommunikationseinrichtungen 140 und 175 bzw. deren assoziierte Datenspeicher aufzuteilen, dass die für den Vergleich erforderlichen zweiten (Identifikations-) informationen in Gänze erst dann verfügbar werden, wenn die Informationsteile insgesamt von den beiden Kommunikationseinrichtungen empfangen wurden.

**Fig. 7** zeigt schließlich ein Diagramm zur Illustration verschiedener durch das Sicherheitsdokument aus Fig. 1 ermöglichten Anwendungsmöglichkeiten zur Identifizierung von Personen, insbesondere im Verkehrswesen.

Vorteilhaft kann das Sicherheitsdokument 100 insbesondere bei einer Passkontrolle an Grenzstandorten, wie etwa Bahnhöfen, Flughäfen oder Autobahnen, als Ausweisdokument, insbesondere Reisepass, zum Einsatz kommen. Um die Wartezeit bei der Passkontrolle zu verkürzen oder die Ein- und Ausreise eines Passinhabers zu kontrollieren, können die ersten oder zweiten Identifikationsinformationen durch den UHF-Transponder 175 bereits aus einer Entfernung von mehreren Metern per Funk mittels eines UHF Transceivers 200 abgefragt werden, um diese mit dritten Identifikationsinformationen zu vergleichen, die etwa mittels Gesichtserkennungssoftware auf Basis eines mittels einer Kamera 195 erfassten Bilds oder Videos der zu identifizierenden Person generiert wurden. Alternativ oder kumulativ können die dritten (Identifikations-) Informationen auch aus einem zu einer Person gehörenden portablen Gerät (Smartphone, Tablet, Wearable), das die Person gegebenenfalls mit sich führt, z.B. in Form einer Rufnummer oder einer Seriennummer **IMEI (I**nternational **M**obile **E**quipment **I**dentity), insbesondere über eine Drahtlos-Kommunikationsverbindung, ermittelt werden. So lässt sich beim Einsatz des Sicherheitsdokuments 100 eine besonders schnelle und daher effiziente und zugleich sichere Passkontrolle ermöglichen. x

Die ersten, zweiten und dritten Identifikationsinformationen stellen somit jeweils für die Personenidentifikation relevante und somit sicherheitsrelevante Informationen dar. Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand.

### BEZUGSZEICHENLISTE

- 100: Sicherheitsdokument
- 105: (Schutz-)Umschlag
- 105a: vordere Umschlagseite
- 105b: hintere Umschlagseite
- 110: Scharnierbereich der vorderen Umschlagseite
- 115: Buchrücken
- 120: Datenseite
- 125: Papierseite(n), insbesondere Visaseite(n)
- 130: Sicherheitselement
- 130a: Sicherheitselement, am Buchrücken befestigt oder darin integriert
- 130b: Sicherheitselement, an Umschlagseite befestigt oder darin integriert
- 130c: Sicherheitselement, an Datenseite befestigt oder darin integriert
- 130d: Sicherheitselement, an Papierseite befestigt oder darin integriert
- 130e: Sicherheitselement, als Faden in einer Naht vernäht
- 135: holographischer Streifen
- 140: Nahfeld-Kommunikationseinrichtung, insbesondere mit NFC-Chip
- 145: erstes Umschlagsubstrat, insbesondere vernähtes Papiergebinde
- 150: zweites Umschlagsubstrat, insbesondere ein- oder mehrschichtiger Karton
- 155: erstes Zwischensubstrat als mehrschichtiges Inlay, ggf. mit integriertem Sicherheitselement 130 bzw. 130b
- 160: zweites Zwischensubstrat ein- oder mehrschichtig, mit integrierter Nahfeld-Kommunikationseinrichtung 140
- 165: drittes Zwischensubstrat, Verstärkungsband, ggf. mit integriertem Sicherheitselement 130 bzw. 130a
- 170: Klebstoff
- 175: erste mikroelektronische Kommunikationseinrichtung, insbes. UHF-Transponderchip
- 180a: erste Antennenleitung
- 180b: zweite Antennenleitung
- 185: Umwickelung
- 190: Zugentlastungselement
- 195: Kamera, gekoppelt an Bildverarbeitungsvorrichtung zur Gesichtserkennung
- 200: UHF-Transceiver zur Funkkommunikation mit Kommunikationseinrichtung 175
- 500: Herstellungsverfahren für Sicherheitsdokument
- 505-535: Verfahrensschritte des Verfahrens 500

## Patentansprüche

1. Sicherheitsdokument (100), insbesondere Ausweisdokument oder Komponente oder Rohling dafür, aufweisend:
eine Anzahl N blattförmiger Substrate (105, 115, 120, 125); und
ein fadenartiges Sicherheitselement (130), das zumindest abschnittsweise in zumindest eines der N Substrate (105, 115, 120, 125) integriert oder daran befestigt ist und das eine erste mikroelektronische Kommunikationseinrichtung (175) mit einer daran elektrisch angeschlossenen Antenneneinrichtung (180a, 180b) zur drahtlosen Kommunikation von sicherheitsrelevanten ersten Informationen an eine bezüglich des Sicherheitsdokuments (100) externe Kommunikationsgegenseite (200) aufweist, wobei das Sicherheitsdokument (100) als ein buchartiges Dokument mit N ≥ 2 konfiguriert ist, **dadurch gekennzeichnet, dass** das buchartige Dokument (100) mit einem Buchrücken (115) ausgebildet ist und das Sicherheitselement (130) zumindest abschnittsweise in den Buchrücken (115) integriert oder an diesem fixiert ist.

2. Sicherheitsdokument (100) nach Anspruch 1 wobei ein erstes der N Substrate (105, 120) als Datenseite (120) oder als Umschlag (105) für das buchartige Dokument (100) konfiguriert ist und das Sicherheitselement (130) zumindest abschnittsweise in dieses erste Substrat integriert ist.

3. Sicherheitsdokument (100) nach Anspruch 2, wobei das erste Substrat einen schichtförmigen Aufbau aufweist, in den das Sicherheitselement (130) zumindest abschnittsweise integriert ist.

4. Sicherheitsdokument (100) nach Anspruch 2 oder 3, wobei:
das erste Substrat einen Scharnierbereich (110) zur Verbindung des ersten Substrats mit wenigstens einem der N-1 anderen Substrate (105a, 105b, 120, 125) zur Ausbildung des buchartigen Dokuments (100) aufweist; und
das Sicherheitselement (130) zumindest abschnittsweise in den Scharnierbereich (110) integriert ist.

5. Sicherheitsdokument (100) nach einem der Ansprüche 1 bis 4, wobei der Buchrücken (115) zu seiner Verstärkung ein textiles Verstärkungsband aufweist, in das das Sicherheitselement (130) zumindest abschnittsweise integriert ist.

6. Sicherheitsdokument (100) nach einem der vorausgehenden Ansprüche, wobei das Sicherheitselement (130) mit einem holographischen Faden oder Streifen zu einem kombinierten faden- bzw. streifenförmigen Sicherheitselement (130) mittels Integration in oder fester Verbindung mit dem holographischen Faden bzw. Streifen kombiniert ist.

7. Sicherheitsdokument (100) nach Anspruch 6 und einem der Ansprüche 2 bis 5, wobei:
das Sicherheitsdokument (100) eine Anzahl M, mit 2 ≤ M ≤ N, von untereinander gleichartigen, blattförmigen Substraten (105a, 105b, 120, 125) aufweist; und
das kombinierte Sicherheitselement (130) in nur eines dieser M Substrate (105a, 105b, 120, 125) integriert oder daran befestigt ist.

8. Sicherheitsdokument (100) nach einem der vorausgehenden Ansprüche, wobei das Sicherheitselement (130, 130e) als Faden einen Teil einer Naht in oder an dem Sicherheitsdokument (100) bildet.

9. Sicherheitsdokument (100) nach Anspruch 8, wobei die Naht zumindest abschnittsweise als Doppelsteppstich-Naht ausgeführt ist, wobei das Sicherheitselement (130) einen Unterfaden der Doppelstich-Naht bildet.

10. Sicherheitsdokument (100) nach einem der vorausgehenden Ansprüche, wobei die Antenneneinrichtung zwei elektrisch voneinander isolierte drahtförmige Antennenleitungen (180a, 180b) aufweist, von denen jede an einer jeweiligen zwischen ihren Enden liegenden Kontaktstelle elektrisch an die erste Kommunikationseinrichtung (175) angeschlossen ist, und wobei die Antennenleitungen (180a, 180b) insgesamt eine Dipolantenne mit elektrisch offenen Enden bilden.

11. Sicherheitsdokument (100) nach einem der vorausgehenden Ansprüche, wobei:
die erste Kommunikationseinrichtung (175) einen passiven Transponder zur drahtlosen Kommunikation der sicherheitsrelevanten Informationen aufweist;
und
die Antenneneinrichtung zudem als Induktionseinrichtung konfiguriert ist, um in Reaktion auf ein auf sie einwirkendes magnetisches oder elektromagnetisches Wechselfeld eine Induktionsspannung zu generieren und damit den Transponder mit elektrischer Energie zu versorgen.

12. Sicherheitsdokument (100) nach einem der vorausgehenden Ansprüche, wobei die erste Kommunikationseinrichtung (175) konfiguriert ist, Informationen im UHF-Band drahtlos zu kommunizieren.

13. Sicherheitsdokument (100) nach einem der vorausgehenden Ansprüche, wobei die erste Kommunikationseinrichtung (175) und die Antenneneinrichtung mit einer sie beide zumindest abschnittsweise umgebenden Ummantelung versehen sind.

14. Sicherheitsdokument (100) nach einem der vorausgehenden Ansprüche, des Weiteren aufweisend eine zweite mikroelektronische Kommunikationseinrichtung (140) zum kontaktlosen Übertragen von aus einem mit der zweiten mikroelektronischen Kommunikationseinrichtung (140) assoziierten oder in ihr enthaltenen zweiten Datenspeicher gelesenen zweiten Informationen;
wobei das Sicherheitsdokument (100) zumindest eine der folgenden Konfigurationen aufweist:
(a) die zweiten Informationen sind in dem zweiten Datenspeicher verschlüsselt abgelegt und/oder der Lesezugriff auf den zweiten Datenspeicher ist durch die zweite Kommunikationseinrichtung (140) nur auf Basis einer Authentifizierung mittels eines Schlüsselcodes möglich; und
die erste Kommunikationseinrichtung (175) ist konfiguriert, den Schlüsselcode zu generieren oder aus einem mit der ersten Kommunikationseinrichtung (175) assoziierten ersten Datenspeicher auszulesen und für die Entschlüsselung der zweiten Informationen bzw. für die Authentifizierung zum autorisierten Lesezugriff auf den zweiten Datenspeicher bereitzustellen;
(b) die ersten Informationen und die zweiten Informationen codieren zusammen eine für eine erfolgreiche Identifikation oder Authentifizierung eines mit den ersten Informationen assoziierten Objekts erforderliche Sicherheitsinformation auf solche Weise, dass die Sicherheitsinformation erst durch Kombinieren der ersten Informationen mit den zweiten Informationen verfügbar wird.

15. Sicherheitsdokument (100) nach Anspruch 14, wobei die zweite Information und/oder die Sicherheitsinformation zumindest teilweise einer anderweitig auf dem Sicherheitsdokument (100) verfügbaren Information entspricht, so dass auf Basis eines Vergleichs dieser anderweitig verfügbaren Information einerseits mit der zweiten Information bzw. der Sicherheitsinformation andererseits eine Mehrfaktoridentifikation bzw. Authentifizierung des Sicherheitsdokuments (100) oder eines damit assoziierten Objekts ermöglicht ist.

16. Verfahren (500) zur maschinellen Herstellung eines Sicherheitsdokuments (100) nach einem der vorausgehenden Ansprüche, insbesondere eines Ausweisdokuments oder einer Komponente oder eines Rohlings dafür, wobei das Verfahren (500) aufweist:
Herstellen (505, 530, 535) oder Empfangen eines Sicherheitsdokuments (100), das eine Anzahl N blattförmiger Substrate (105, 120, 125), mit N ≥ 2 aufweist;
und Integrieren oder Befestigen (510; 515; 520, 525) eines fadenartigen Sicherheitselements (130), in bzw. an zumindest einem der N Substrate (105, 120, 125), wobei das Sicherheitselement (130) eine erste mikroelektronische Kommunikationseinrichtung (175) mit einer daran angeschlossenen Antenneneinrichtung (180a, 180b) zur drahtlosen Kommunikation von ersten sicherheitsrelevanten Informationen an eine bezüglich des Sicherheitsdokuments (100) externe Kommunikationsgegenseite (200) aufweist, wobei das Sicherheitsdokument (100) als ein buchartiges Dokument mit N ≥ 2 konfiguriert ist, wobei das buchartige Dokument (100) mit einem Buchrücken (115) ausgebildet ist und das Sicherheitselement (130) zumindest abschnittsweise in den Buchrücken (115) integriert oder an diesem fixiert wird.

17. Verfahren (500) nach Anspruch 16, wobei das Integrieren oder Befestigen (510; 515; 520, 525) des Sicherheitselements (130) zumindest teilweise auf wenigstens eine der folgenden Weisen erfolgt:
Ausbilden einer stoffschlüssigen Verbindung des Sicherheitselements (130; 130a; 130b; 130c, 130d) mit dem zumindest einen Substrat (105, 115, 120, 125); maschinelles Ausbilden einer Naht in dem zumindest einen Substrat, wobei das Sicherheitselement (130, 130e) als ein Faden der Naht vernäht wird.

## Claims

1. Security document (100), in particular identity document or component or blank therefor, comprising:
a number N of sheet-shaped substrates (105, 115, 120, 125); and
a thread-like security element (130) which is integrated at least in sections into at least one of the N substrates (105, 115, 120, 125) or is fastened thereto and which has a first microelectronic communication device (175) with an antenna device (180a, 180b) electrically connected thereto for wireless communication of security-relevant first information to a communication counterpart (200) external with respect to the security document (100), wherein the security document (100) is configured as a book-like document with N ≥ 2,
**characterized in that**
the book-like document (100) is formed with a book spine (115) and the security element (130) is integrated at least in sections into the book spine (115) or is fixed thereto.

2. Security document (100) according to Claim 1, wherein a first of the N substrates (105, 120) is configured as a data page (120) or as an envelope (105) for the book-like document (100) and the security element (130) is integrated at least in sections into this first substrate.

3. Security document (100) according to Claim 2, wherein the first substrate has a layered structure into which the security element (130) is integrated at least in sections.

4. Security document (100) according to Claim 2 or 3, wherein:
the first substrate has a hinge region (110) for connecting the first substrate to at least one of the N-1 other substrates (105a, 105b, 120, 125) in order to form the book-like document (100); and
the security element (130) is integrated at least in sections into the hinge region (110).

5. Security document (100) according to any one of Claims 1 to 4, wherein the book spine (115) has, for its reinforcement, a textile reinforcing tape into which the security element (130) is integrated at least in sections.

6. Security document (100) according to any one of the preceding claims, wherein the security element (130) is combined with a holographic thread or strip to form a combined thread-shaped or strip-shaped security element (130) by means of integration in or firm connection with the holographic thread or strip.

7. Security document (100) according to Claim 6 and any one of Claims 2 to 5, wherein:
the security document (100) has a number M, where 2 ≤ M ≤ N, of sheet-shaped substrates (105a, 105b, 120, 125) which are similar in kind to one another; and
the combined security element (130) is integrated into only one of these M substrates (105a, 105b, 120, 125) or is fastened thereto.

8. Security document (100) according to any one of the preceding claims, wherein the security element (130, 130e) forms, as a thread, part of a seam in or on the security document (100).

9. Security document (100) according to Claim 8, wherein the seam is embodied at least in sections as a double stitch seam, wherein the security element (130) forms a lower thread of the double stitch seam.

10. Security document (100) according to any one of the preceding claims, wherein the antenna device has two wire-shaped antenna lines (180a, 180b) which are electrically insulated from one another and each of which is electrically connected to the first communication device (175) at a respective contact point situated between their ends, and wherein the antenna lines (180a, 180b) overall form a dipole antenna with electrically open ends.

11. Security document (100) according to any one of the preceding claims, wherein:
the first communication device (175) has a passive transponder for wireless communication of the security-relevant information; and
the antenna device is also configured as an induction device in order to generate an induction voltage in response to an alternating magnetic or electromagnetic field acting on it and thus to supply the transponder with electrical energy.

12. Security document (100) according to any one of the preceding claims, wherein the first communication device (175) is configured to wirelessly communicate information in the UHF band.

13. Security document (100) according to any one of the preceding claims, wherein the first communication device (175) and the antenna device are provided with a sheathing which surrounds them both at least in sections.

14. Security document (100) according to any one of the preceding claims, further comprising a second microelectronic communication device (140) for contactless transmission of second information read from a second data memory associated with or contained in the second microelectronic communication device (140); wherein the security document (100) has at least one of the following configurations:
(a) the second information is stored in encrypted form in the second data memory and/or read access to the second data memory is possible by the second communication device (140) only on the basis of authentication by means of a key code; and
the first communication device (175) is configured to generate the key code or to read it from a first data memory associated with the first communication device (175) and to provide it for decryption of the second information or for authentication for authorized read access to the second data memory;
(b) the first information and the second information together encode security information required for successful identification or authentication of an object associated with the first information in such a way that the security information is only available by combining the first information with the second information.

15. Security document (100) according to Claim 14, wherein the second information and/or the security information at least partially corresponds to information otherwise available on the security document (100), such that, on the basis of a comparison of this otherwise available information on the one hand with the second information or the security information on the other hand, multifactor identification or authentication of the security document (100) or of an object associated therewith is made possible.

16. Method (500) for the machine production of a security document (100) according to any one of the preceding claims, in particular an identity document or a component or a blank therefor, wherein the method (500) comprises:
producing (505, 530, 535) or receiving a security document (100) which has a number N of sheet-shaped substrates (105, 120, 125), where N ≥ 2; and integrating or fastening (510; 515; 520, 525) a thread-like security element (130) into or to at least one of the N substrates (105, 120, 125), wherein the security element (130) has a first microelectronic communication device (175) with an antenna device (180a, 180b) connected thereto for wireless communication of first security-relevant information to a communication counterpart (200) external with respect to the security document (100), wherein the security document (100) is configured as a book-like document with N ≥ 2, wherein the book-like document (100) is formed with a book spine (115) and the security element (130) is integrated at least in sections into the book spine (115) or is fixed thereto.

17. Method (500) according to Claim 16, wherein the integration or fastening (510; 515; 520, 525) of the security element (130) takes place at least partially in at least one of the following ways:
forming a cohesive connection of the security element (130; 130a; 130b; 130c, 130d) to the at least one substrate (105, 115, 120, 125);
machine-forming a seam in the at least one substrate, wherein the security element (130, 130e) is sewn as a thread of the seam.

## Revendications

1. Document de sécurité (100), notamment document d'identité ou composant ou ébauche de celui-ci, présentant :
un nombre N de substrats en forme de feuille (105, 115, 120, 125) ; et
un élément de sécurité (130) de type filaire, qui est intégré au moins par endroits dans au moins un des N substrats (105, 115, 120, 125) ou est fixé sur celui-ci et qui présente un premier dispositif de communication microélectronique (175) avec un dispositif d'antenne (180a, 180b) connecté électriquement à celui-ci pour la communication sans fil de premières informations pertinentes pour la sécurité à une contrepartie de communication externe (200) en ce qui concerne le document de sécurité (100), dans lequel le document de sécurité (100) est configuré comme un document de type livre avec N ≥ 2, **caractérisé en ce que** le document de type livre (100) est réalisé avec un dos de livre (115) et l'élément de sécurité (130) est intégré au moins par endroits dans le dos de livre (115) ou y est fixé.

2. Document de sécurité (100) selon la revendication 1, dans lequel un premier des N substrats (105, 120) est configuré en tant que page de données (120) ou en tant qu'enveloppe (105) pour le document de type livre (100) et l'élément de sécurité (130) est intégré au moins par endroits dans ledit premier substrat.

3. Document de sécurité (100) selon la revendication 2, dans lequel le premier substrat présente une structure en forme de couche dans laquelle l'élément de sécurité (130) est intégré au moins par endroits.

4. Document de sécurité (100) selon la revendication 2 ou 3, dans lequel :
le premier substrat présente une zone de charnière (110) pour relier le premier substrat à au moins un des autres N-1 substrats (105a, 105b, 120, 125) pour former le document de type livre (100) ; et
l'élément de sécurité (130) est intégré au moins par endroits dans la zone de charnière (110).

5. Document de sécurité (100) selon l'une quelconque des revendications 1 à 4, dans lequel le dos de livre (115) présente pour son renforcement une bande de renfort textile dans laquelle l'élément de sécurité (130) est intégré au moins par endroits.

6. Document de sécurité (100) selon l'une quelconque des revendications précédentes, dans lequel l'élément de sécurité (130) est combiné avec un fil ou une bande holographique pour former un élément de sécurité (130) combiné en forme de fil ou de bande par intégration dans ou liaison solidaire au fil ou à la bande holographique.

7. Document de sécurité (100) selon la revendication 6 et l'une quelconque des revendications 2 à 5, dans lequel : le document de sécurité (100) présente un nombre M, avec 2 ≤ M ≤ N, de substrats en forme de feuille (105a, 105b, 120, 125) similaires les uns aux autres ; et l'élément de sécurité combiné (130) est intégré dans un seul de ces M substrats (105a, 105b, 120, 125) ou est fixé à celui-ci.

8. Document de sécurité (100) selon l'une quelconque des revendications précédentes, dans lequel l'élément de sécurité (130, 130e) forme, en tant que fil, une partie d'une couture dans ou sur le document de sécurité (100).

9. Document de sécurité (100) selon la revendication 8, dans lequel la couture est réalisée au moins par endroits en tant que couture à double piqûre, dans lequel l'élément de sécurité (130) forme un fil inférieur de la couture à double piqûre.

10. Document de sécurité (100) selon l'une quelconque des revendications précédentes, dans lequel le dispositif d'antenne présente deux lignes d'antenne (180a, 180b) isolées électriquement l'une de l'autre, dont chacune est connectée électriquement au premier dispositif de communication (175) sur un point de contact respectif situé entre leurs extrémités, et dans lequel les lignes d'antenne (180a, 180b) forment ensemble une antenne dipolaire avec des extrémités électriquement ouvertes.

11. Document de sécurité (100) selon l'une quelconque des revendications précédentes, dans lequel : le premier dispositif de communication (175) présente un transpondeur passif pour la communication sans fil des informations importantes pour la sécurité ; et
le dispositif d'antenne est en outre configuré en tant que dispositif d'induction pour générer une tension d'induction en réaction à un champ alternatif magnétique ou électromagnétique agissant sur celui-ci et ainsi alimenter le transpondeur en énergie électrique.

12. Document de sécurité (100) selon l'une quelconque des revendications précédentes, dans lequel le premier dispositif de communication (175) est configuré pour communiquer des informations en bande UHF sans fil.

13. Document de sécurité (100) selon l'une quelconque des revendications précédentes, dans lequel le premier dispositif de communication (175) et le dispositif d'antenne sont pourvus d'une gaine les entourant au moins par endroits.

14. Document de sécurité (100) selon l'une quelconque des revendications précédentes, présentant par ailleurs un deuxième dispositif de communication microélectronique (140) pour la transmission sans contact de deuxièmes informations lues depuis une deuxième mémoire de données associée au deuxième dispositif de communication microélectronique (140) ou contenue dans celui-ci ;
dans lequel le document de sécurité (100) présente au moins une des configurations suivantes :
(a) les deuxièmes informations sont sauvegardées de manière cryptée dans la deuxième mémoire de données et/ou l'accès en lecture à la deuxième mémoire de données par le deuxième dispositif de communication (140) n'est possible que sur la base d'une authentification au moyen d'un code de clé ; et
le premier dispositif de communication (175) est configuré pour générer le code de clé ou le lire depuis une première mémoire de données associée au premier dispositif de communication (175) et le fournir pour le déchiffrement des deuxièmes informations ou pour l'authentification pour l'accès en lecture autorisé à la deuxième mémoire de données ;
(b) les premières informations et les deuxièmes informations codent ensemble une information de sécurité nécessaire pour une identification ou une authentification réussie d'un objet associé aux premières informations de telle sorte que l'information de sécurité ne devienne disponible qu'en combinant les premières informations aux deuxièmes informations.

15. Document de sécurité (100) selon la revendication 14, dans lequel la deuxième information et/ou l'information de sécurité correspond(ent) au moins en partie à une autre information disponible sur le document de sécurité (100), de telle sorte que sur la base d'une comparaison de cette autre information disponible d'une part à la deuxième information ou à l'information de sécurité d'autre part, une identification multifacteur ou une authentification du document de sécurité (100) ou d'un objet associé sont rendues possibles.

16. Procédé (500) de fabrication mécanique d'un document de sécurité (100) selon l'une quelconque des revendications précédentes, en particulier d'un document d'identité ou d'un composant ou d'une ébauche de celui-ci, dans lequel le procédé (500) présente :
la fabrication (505, 530, 535) ou la réception d'un document de sécurité (100), qui présente un nombre N de substrats en forme de feuille (105, 120, 125), avec N ≥ 2 ;
et l'intégration ou la fixation (510 ; 515 ; 520, 525) d'un élément de sécurité (130) de type fil, dans ou sur au moins un des N substrats (105, 120, 125), dans lequel l'élément de sécurité (130) présente un premier dispositif de communication microélectronique (175) avec un dispositif d'antenne (180a, 180b) connecté à celui-ci pour la communication sans fil de premières informations importantes pour la sécurité à une contrepartie de communication externe (200) en ce qui concerne le document de sécurité (100), dans lequel le document de sécurité (100) est configuré comme un document de type livre avec N ≥ 2, dans lequel le document de type livre (100) est réalisé avec un dos de livre (115) et l'élément de sécurité (130) est intégré au moins par endroits dans le dos de livre (115) ou y est fixé.

17. Procédé (500) selon la revendication 16, dans lequel l'intégration ou la fixation (510 ; 515 ; 520, 525) de l'élément de sécurité (130) est effectuée au moins en partie d'au moins une des manières suivantes :
en réalisant une liaison par liaison de matière de l'élément de sécurité (130 ; 130a ; 130b ; 130c, 130d) à l'au moins un substrat (105, 115, 120, 125) ; en réalisant de manière mécanique une couture dans l'au moins un substrat, dans lequel l'élément de sécurité (130, 130e) est cousu en tant que fil de la couture.
